# EUROPÄISCHE PATENTSCHRIFT

(11) **EP 1 663 766 B1**
(45) Veröffentlichungstag und Bekanntmachung des Hinweises auf die Patenterteilung: **02.04.2008**
(21) Anmeldenummer: 04764131.1
(22) Anmeldetag: 14.08.2004
(51) Int. Cl.: B62D 33/067

(54) **LÄNGSTRÄGER FÜR EIN FAHRERHAUS SOWIE TRAGSTRUKTUR MIT EINEM LÄNGSTRÄGER**
LONGITUDINAL BEAM FOR A DRIVER'S CAB AND CARRIER STRUCTURE COMPRISING ONE SUCH LONGITUDINAL BEAM
LONGERON POUR UNE CABINE DE CONDUITE ET STRUCTURE DE SUPPORT COMPORTANT UN LONGERON

(30) Priorität: 18.09.2003 DE 10343138
(43) Veröffentlichungstag der Anmeldung: 07.06.2006
(73) Patentinhaber: Daimler AG, 70327 Stuttgart (DE)
(72) Erfinder: FISCHER, Herbert, 71263 Weil der Stadt (DE)
(74) Vertreter: Thoms, Frank
(86) Internationale Anmeldenummer: PCT/EP2004/009139
(87) Internationale Veröffentlichungsnummer: WO 2005/035340

(56) Entgegenhaltungen:
- WO-A-03/029069
- DE-A- 10 007 664
- DE-A- 10 124 271
- US-A- 5 863 093
- PATENT ABSTRACTS OF JAPAN Bd. 2000, Nr. 19, 5. Juni 2001 (2001-06-05) & JP 2001 039345 A (NISSAN DIESEL MOTOR CO LTD), 13. Februar 2001 (2001-02-13)

## Beschreibung

Die Erfindung betrifft einen Längsträger für ein Fahrerhaus sowie eine Tragstruktur mit einem Längsträger nach den Oberbegriffen der unabhängigen Ansprüche.

Bekanntermaßen verfügt ein Fahrerhaus für ein Nutzfahrzeug nicht über die im PKW-Bereich üblichen Verformungszonen wie etwa einen Motorraum, der sich vor einer Fahrgastzelle befindet. Ein Insassenschutz im Nutzfahrzeugbereich muss daher über ergänzende Maßnahmen erzielt werden.

Aus der gattungsbildenden Offenlegungsschrift DE 101 24 271 A1 ist eine Tragstruktur für ein Fahrerhaus eines Nutzfahrzeugs mit unterhalb einer Bodenplatte angeordneten Längsträgern aus Hohlprofilen oder U-Profilen bekannt. Die Längsträger erstrecken sich winkelförmig nach oben über die Bodenplatte hinaus, wobei die freien Enden der nach oben abstehenden Längsträgerbereiche an einen Querträger angeschlossen sind. Damit wird bewirkt, dass der Insassenschutz im Fahrerhaus unter Beibehaltung einer versteifenden Bodenkonstruktion verbessert wird.

Die Offenlegungsschrift WO03/029069 A1 offenbart einen geraden, hydrogeformten Längsträger, an den ein geprägtes Blechstück als Halteelement für ein Türelement angesetzt ist. Die Offenlegungsschrift DE 100 07 664 A1, aber auch die JP 2001039345 A offenbaren einen Längsträger, an den ein gerades Hohlprofil angesetzt ist, das winklig absteht.

Das Patent US 5,863,093 A1 offenbart zwei parallele Längsträger, an die stirnseitig an Aufnahmen eine Frontwand angesetzt ist.

Der Erfindung liegt die Aufgabe zugrunde, einen Längsträger sowie eine Tragstruktur anzugeben, mit der der Insassenschutz weiter verbessert werden kann und zusätzlich eine produktionsfreundliche und genaue Bearbeitung des Längsträgers möglich ist.

Die Aufgabe wird erfindungsgemäß durch die Merkmale der unabhängigen Ansprüche gelöst.

Der erfindungsgemäße Längsträger ist aus einem im Wesentlichen geraden Längsträgerabschnitt und einem separaten Längsträgerkopf zusammengesetzt. Die Einzelteile können separat gefertigt werden und ihre Eigenschaften entsprechend ihrer Aufgabe am jeweiligen Einbauort angepasst werden. Weiterhin kann der Längsträgerkopf mit einer Vielzahl von Funktionen ausgestattet werden, wobei dieser als kompaktes Bauteil leichter zu bearbeiten ist als ein ausgedehnter Längsträgerkörper. Die elastischen Eigenschaften der Einzelteile lassen sich durch unterschiedliche Materialwahl und/oder Formgebung optimieren. Durch eine Verbindung des Längsträgerkopfs mit dem Längsträgerabschnitt in einem Anbindungsbereich kann sich eine bevorzugte winklige Form des gesamten Längsträgers ergeben. Der Längsträgerkopf ist winkelförmig aus einem zu einem Längsträgerabschnitt hin weisenden ersten Anschlussstück und einem nach oben abstehenden zweiten Anschlussstück gebildet, kann der Längsträgerkopf einen Übergang zu einer Stirnwand eines Fahrerhauses bilden. Damit ist eine momentensteife Ausbildung des Obergangs von der Stirnwand zu dem Längsträgerabschnitt, der einer Bodengruppe zugeordnet ist, möglich. Dies ist besonders bei einer Bodengruppen günstig, die einen so genannten Sandwichboden aufweist. Die Sicherheit des Fahrers ist erhöht, und ein Oberlebensraum bei einem Zusammenstoß sowie bei einem Pendelschlag ist verbessert. Ferner ist in den Längsträgerkopf eine Mehrzahl von Anbindungen integriert. Dadurch können alle wesentlichen Anbindungspunkte für Komponenten des Fahrerhauses in diesem Längsträgerkopf auf kompaktem Raum vorgesehen werden. Durch die Ausbildung des Längsträgerkopfs als Gussteil können diese maßgenau zueinander angebracht werden. Dies erleichtert die Montage, ist produktionsfreundlich, verringert einen Produktionsausschuss und erspart einen teuren und zeitaufwändigen Nacharbeitsaufwand.

Ist das erste Anschlussstück massiv ausgebildet, kann eine vorteilhafte und stabile Anbindung an den Längsträgerabschnitt erreicht werden. Es können Durchbrüche vorgesehen sein, ohne die Stabilität des Anschlussstücks zu beeinträchtigen.

Ist das zweite Anschlussstück in etwa U-förmig ausgebildet, können dort eine Vielzahl von Anbindungspunkten angebracht werden. Senkrecht oder winklig abstehende Stege bieten Aufnahmemöglichkeiten für Komponenten.

Da der Längsträgerkopf als Gussteil ausgebildet ist, lassen sich sehr einfach und produktionsfreundlich viele Funktionen wie Anbindungen oder Lagerungen in einem einzigen Teil integrieren. Bevorzugt wird ein Stahlgusswerkstoff mit einer hohen Dehnung verwendet. Ein solcher Längsträgerkopf kann beispielsweise auf einem Bearbeitungszentrum bearbeitet werden, so dass alle Lager- und Anbindungspunkte eine außerordentlich hohe Maßgenauigkeit zueinander aufweisen. Weiterhin bedeutet die Ausbildung als Gussteil einen momentensteifen Übergangsbereich von einem nach oben abgewinkelten Anschlussstück zu einem geraden Längsträgerabschnitt unter einer Bodenplatte. Dies ermöglicht eine Integration des Fahrerhauslagers in den oder die Längsträger, die somit auch als Abstützung des Fahrerhauses an der Tragstruktur des Fahrzeugs dienen, unabhängig davon, ob das Fahrerhaus kippbar oder fest auf der Tragstruktur gelagert ist.

Ist zwischen winklig zu einer Stirnwand abstehenden Stegen des zweiten Anschlussstücks eine Anbindung für ein Federbein vorgesehen, kann eine einfach herzustellende Verbindung zwischen dem Federbein für die Fahrerhauslagerung und dem Längsträger geschaffen werden.

Ist zwischen winklig abstehenden Stegen des zweiten Anschlussstücks eine Anbindung für ein Drehlager eines Dämpfers vorgesehen, kann eine einfach herzustellende Verbindung zwischen dem Dämpfer für die Fahrerhauslagerung und dem Längsträger geschaffen werden.

Ist am zweiten Anschlussstück eine Anbindung für einen Pedallagerbock und/oder eine Lenksäulenbefestigung vorgesehen, kann eine einfach herzustellende Verbindung zwischen dem Längsträger und der Pedalanlage und/oder der Lenksäule geschaffen werden. Besonders günstig ist es, einen Kombinationslagerbock für die Pedalanlage und die Lenksäulenbefestigung einzusetzen.

Ist der Längsträgerabschnitt U-förmig ausgebildet, wobei Schenkel der U-Form nach oben weisen, bildet der Längsträgerabschnitt eine besonders steife und stabile Anordnung.

Ragt der Längsträgerkopf mit seinem ersten Anschlussstück in die U-Form des Längsträgerabschnitts hinein, bildet dies eine sichere Lagerung für den Längsträgerkopf für das erste Anschlussstück des Längsträgerkopfs, das auf dem Bodenteil des U-Profils aufliegen kann.

Ist im Übergang des Längsträgerkopfs vom ersten zum zweiten Anschlussstück eine Anbindung für einen Lagerbock für ein Fahrerhaus vorgesehen, kann der Lagerbock bzw. das Fahrerhauslager für ein kippbares Fahrerhaus im Übergangsbereich von Längsträger in die Stirnwand mit integriert werden und gleichzeitig als Abstützung dienen. Wird ein anderer Drehpunkt des Fahrerhauslagers gewünscht, kann der Lagerbock einfach gegen einen anderen getauscht werden.

Ist im ersten Anschlussstück ein Durchbruch für eine Lenksäule vorgesehen, ergibt sich eine kompakte Anordnung. Durch die massive Ausbildung des ersten Anschlussstücks bleibt die notwendige Stabilität des Längsträgers insgesamt erhalten.

Ist im Bereich des Anbindungsbereichs eine Anbindung für einen Kippzylinder vorgesehen, ergibt dies eine kompakte und einfach herzustellende Verbindung des Längsträgers mit dem Kippzylinder, mit dem das Fahrerhaus gekippt werden kann.

Sind zumindest zwei Längsträger parallel zu einer Fahrzeuglängsachse vorgesehen sind, deren nach oben über eine Bodenplatte hinausragenden zweiten Anschlussstücke mit einem Querträger verbunden sind, ist eine stabile Tragstruktur mit verbesserter Insassensicherheit geschaffen. Die nach oben abstehenden, über die Bodenplatte hinausragenden Enden der Längsträger in Verbindung mit dem in die Tragstruktur eingeschlossenen Querträger ergeben einen steifen Verbund der Tragstruktur an das Fahrerhaus, so dass insbesondere die Vorderfront des Fahrerhauses für einen Frontalaufprall besonders versteifend ausgebildet ist. Bei auf die Vorderfront des Fahrerhauses wirkenden Aufprallkräften können diese durch die nach oben abstehenden Anschlussstücke aufgenommen und direkt in die Bodengruppe weitergeleitet werden, so dass eine Intrusion der Stirnwand vermieden werden kann.

Ist der Querträger in eine Stirnwand integriert, ergibt sich eine günstige momentensteife Umlenkung von Kräften vom Längsträger in die Stirnwand und umgekehrt.

Ist ein Lagerbock in einen Übergang zwischen Längsträger und Stirnwand integriert, kann gleichzeitig eine Abstützung des Fahrerhauses am vorderen Fahrerhauslager erreicht werden.

Günstige Ausgestaltungen und Vorteile der Erfindung sind der Beschreibung sowie den weiteren Ansprüchen zu entnehmen.

Im folgenden wird die Erfindung anhand eines in der Zeichnung beschriebenen Ausführungsbeispiels näher erläutert.

Dabei zeigen:
- Fig. 1: Eine Ansicht einer Tragstruktur mit einer Bodengruppe und einem Querträger der Stirnwand,
- Fig. 2: eine Detailansicht des Längsträgers mit Längsträgerkopf,
- Fig. 3: eine Ansicht des Längsträgerkopfs aus einem anderen Blickwinkel, und
- Fig. 4: eine seitliche Ansicht des Längsträgerkopfs mit Lagerbock für das Fahrerhaus.

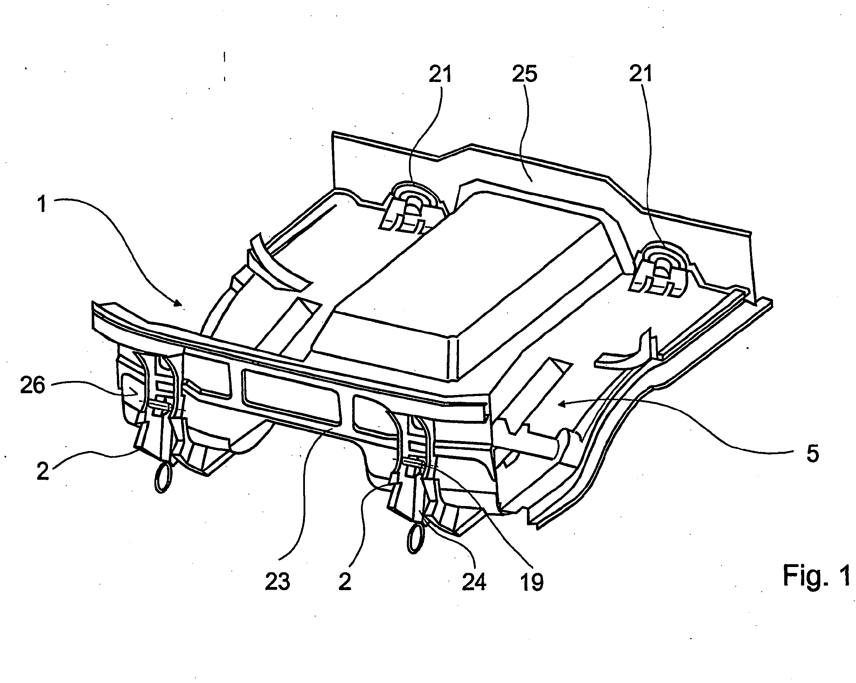

Eine Ansicht einer Tragstruktur 1 mit einer Bodengruppe zeigt Fig. 1. In den Figuren sind gleiche Teile grundsätzlich mit gleichen Bezugszeichen beziffert. Eine Bodenplatte 5 ist zwischen einer Rückwand 25 und einer Stirnwand 26 angeordnet. Unter der Bodenplatte 5 erstrecken sich zwei parallel zu einer Fahrzeuglängsachse verlaufende Längsträger 2, die an der Rückwand 25 mit Befestigungen 21 befestigt sind und nach vorne je mit einem Längsträgerkopf 4; der nach- oben abgewinkelt ist, über die Bodenplatte 5 hinausragen. Die freien Enden der Längsträgerköpfe 4 sind mit einem Querträger 23 der Stirnwand 26 verbunden. Die Lage der Längsträger 2 ist so gewählt, dass ein nicht dargestelltes Fahrersitzmodul entsprechend der Fahrzeugseite, an der eine Lenksäule angebracht ist, in einen der Längsträger 2 mit eingebunden ist und der Längsträger 2 mittig des Fahrerarbeitsplatzes angeordnet ist. Weitere Details der Tragstruktur 1 wie Rahmenelemente des Fahrerhauses und dergleichen sind nicht dargestellt.

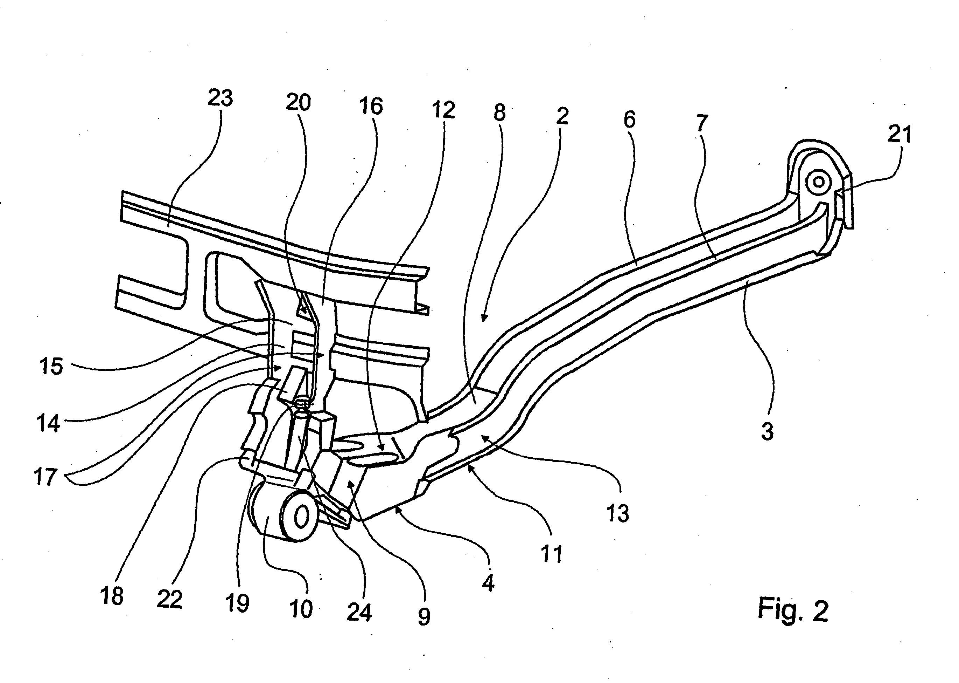

Fig. 2 zeigt eine detaillierte Darstellung eines der Längsträger 2. Der Längsträgerkopf 4 ist winkelförmig aus einem zu einem im Wesentlichen geraden Längsträgerabschnitt 3 hin weisenden ersten Anschlussstück 8 und einem nach oben abstehenden zweiten Anschlussstück 14 gebildet und aus einem Gusswerkstoff gefertigt. Das erste Anschlussstück 8 ist massiv ausgebildet und liegt in einem Anbindungsbereich 11 in dem Längsträgerabschnitt 3, welcher U-förmig ausgebildet ist mit nach oben Richtung Bodenplatte 5 weisenden Schenkeln 6, 7. Das erste Anschlussstück 8 kann mit dem Längsträgerabschnitt 3 verschweißt und/oder verschraubt sein. Im Anbindungsbereich 11 ist eine Anbindung 13 für einen nicht dargestellten Kippzylinder zum Kippen des Fahrerhauses vorgesehen.

Das zweite Anschlussstück 14 ist in etwa U-förmig ausgebildet. In den Längsträgerkopf 4 ist eine Mehrzahl von Anbindungen 13, 17, 18, 20, 22 integriert. Zwischen winklig zu einer Stirnwand 26 abstehenden Stegen 15, 16 des zweiten Anschlussstücks 14 ist eine Anbindung 17 für ein Federbein zur Fahrerhauslagerung vorgesehen. Alternativ kann zur Fahrerhauslagerung zwischen den winklig abstehenden Stegen 15, 16 des zweiten Anschlussstücks 14 eine Anbindung 18 für ein Drehlager 19 eines Dämpfers vorgesehen sein.

Am zweiten-Anschlussstück- 14 ist weiterhin eine Anbindung 20 für einen Pedallagerbock und/oder eine Lenksäulenbefestigung, insbesondere für einen Kombinationslagerbock für die Pedalanlage und die Lenksäulenbefestigung, vorgesehen.

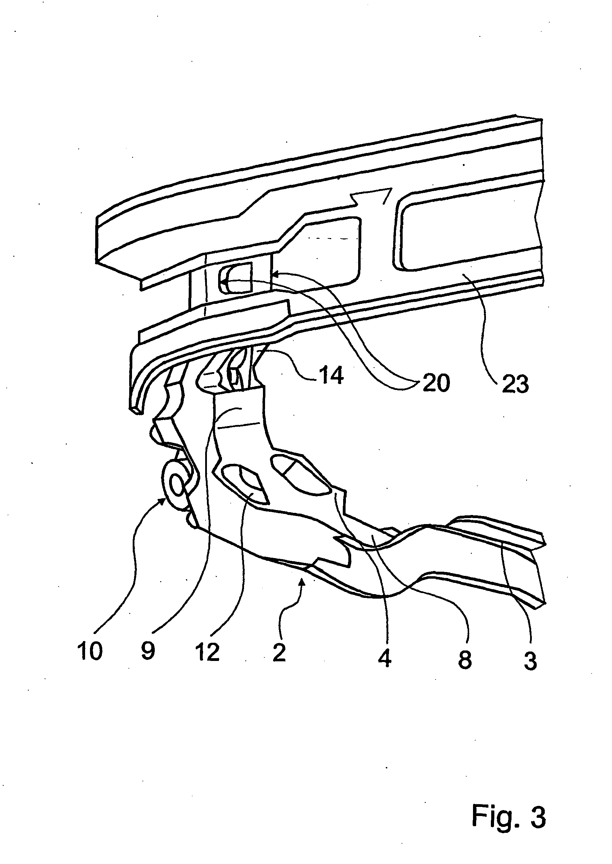

Im ersten Anschlussstück 8 des Längsträgerkopfs 4 ist weiterhin ein Durchbruch 12 für eine Lenksäule vorgesehen. Dies ist vergrößert und unter einem anderen Blickwinkel in Fig. 3 dargestellt. Für die Anbindung 20 des Pedallagerbocks bzw. des Kombinationslagerbocks weist die Querstrebe 23 einen entsprechenden Durchbruch auf.

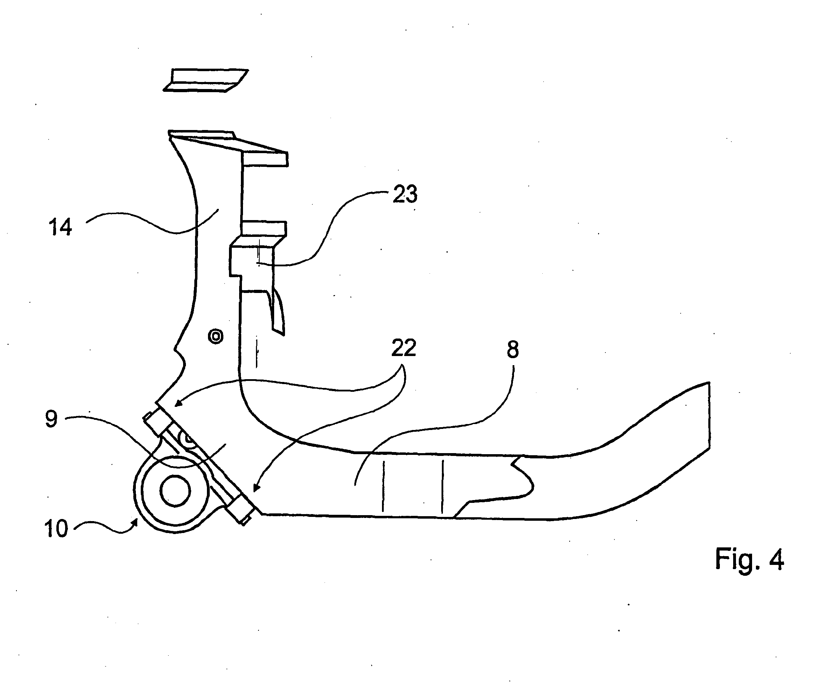

Im Übergang 9 des Längsträgerkopfs 4 vom ersten zum zweiten Anschlussstück 8, 14 ist eine Anbindung 22 für einen Lagerbock 10 für das Fahrerhaus vorgesehen. Dies ist im Detail in Fig. 4 dargestellt. Um einen Drehpunkt des Fahrerhauses zu ändern, kann einfach der Lagerbock 10 gegen einen anderen ausgetauscht werden.

## Patentansprüche

1. Längsträger für ein Fahrerhaus, der sich winkelförmig nach oben über eine Bodenplatte (5) hinaus erstreckt,
**dadurch gekennzeichnet,**
**dass** ein im wesentlichen gerader Längsträgerabschnitt (3) mit einem separaten Längsträgerkopf (4) zusammengesetzt ist, wobei der Längsträgerkopf (4) winkelförmig aus einem zu dem Längsträgerabschnitt (3) hin weisenden ersten Anschlussstück (8) und einem nach oben abstehenden zweiten Anschlussstück (14) gebildet ist, wobei in den Längsträgerkopf (4) eine Mehrzahl von Anbindungen für Komponenten des Fahrerhauses (13,17,18,20,22) integriert ist, und wobei der Längsträgerkopf (4) als Gussteil ausgebildet ist.

2. Längsträger nach Anspruch 1,
**dadurch gekennzeichnet ,**
**dass** das erste Anschlussstück (8) massiv ausgebildet ist.

3. Längsträger nach Anspruch 1 oder 2,
**dadurch gekennzeichnet ,**
**dass** das zweite Anschlussstück (14) in etwa U-förmig ausgebildet ist.

4. Längsträger nach zumindest einem der vorangegangenen Ansprüche,
**dadurch gekennzeichnet,**
**dass** zwischen winklig zu einer Stirnwand abstehenden Stegen (15, 16) des zweiten Anschlussstücks (14) eine Anbindung (17) für ein Federbein vorgesehen ist.

5. Längsträger nach zumindest einem der vorangegangenen Ansprüche,
**dadurch gekennzeichnet ,**
**dass** zwischen winklig abstehenden Stegen (15, 16) des zweiten Anschlussstücks (14) eine Anbindung (18) für ein Drehlager (19) eines Dämpfers vorgesehen ist.

6. Längsträger nach zumindest einem der vorangegangenen Ansprüche,
**dadurch gekennzeichnet,**
**dass** am zweiten Anschlussstück (14) eine Anbindung (20) für einen Pedallagerbock und/oder eine Lenksäulenbefestigung vorgesehen ist.

7. Längsträger nach zumindest einem der vorangegangenen Ansprüche,
**dadurch gekennzeichnet ,**
**dass** der Längsträgerabschnitt (3) U-förmig ausgebildet ist, wobei Schenkel (6, 7) der U-Form nach oben weisen.

8. Längsträger nach Anspruch 7,
**dadurch gekennzeichnet ,**
**dass** der Längsträgerkopf (4) mit seinem ersten Anschlussstück (8) in die U-Form des Längsträgerabschnitts (3) hineinragt.

9. Längsträger nach zumindest einem der vorangegangenen Ansprüche,
**dadurch gekennzeichnet ,**
**dass** im Übergang (9) des Längsträgerkopfs (4) vom ersten zum zweiten Anschlussstück (8, 14) eine Anbindung (22) für einen Lagerbock (10) für ein Fahrerhaus (1) vorgesehen ist.

10. Längsträger nach zumindest einem der vorangegangenen Ansprüche,
**dadurch gekennzeichnet ,**
**dass** im ersten Anschlussstück (8) ein Durchbruch (12) für eine Lenksäule vorgesehen ist.

11. Längsträger nach zumindest einem der vorangegangenen Ansprüche,
**dadurch gekennzeichnet ,**
**dass** im Bereich des Anbindungsbereichs (11) eine Anbindung (13) für einen Kippzylinder vorgesehen ist.

12. Tragstruktur mit einem Längsträger (2) nach zumindest einem der vorangegangenen Ansprüche,
**dadurch gekennzeichnet ,**
**dass** zumindest zwei Längsträger (2) parallel zu einer Fahrzeuglängsachse vorgesehen sind, deren nach oben über eine Bodenplatte (5) hinausragenden zweiten Anschlussstücke (14) mit einem Querträger (23) verbunden sind.

13. Tragstruktur nach Anspruch 12,
**dadurch gekennzeichnet ,**
**dass** der Querträger (23) in eine Stirnwand (26) integriert ist.

14. Tragstruktur nach Anspruch 12 oder 13
**dadurch gekennzeichnet ,**
**dass** ein Lagerbock (10) in einen Übergang zwischen Längsträger (2) und Stirnwand (23) integriert ist.

## Claims

1. A longitudinal beam for a driver's cab which extends upwards beyond a base plate (5) at an angle,
**characterised in that**
an essentially straight longitudinal beam section (3) is put together with a separate longitudinal beam head (4), the longitudinal beam head (4) comprising a first connecting piece (8) pointing towards the longitudinal beam section (3) and an upward projecting second connecting piece (14) which together form an angle, there being integrated in the longitudinal beam head (4) a plurality of connectors for components of the driver's cab (13, 17, 18, 20, 22), and the longitudinal beam head (4) being designed as a cast part.

2. A longitudinal beam in accordance with claim 1,
**characterised in that**
the first connecting piece (8) is solid in design.

3. A longitudinal beam in accordance with claim 1 or 2,
**characterised in that**
the second connecting piece (14) is U-shaped in design.

4. A longitudinal beam in accordance with at least one of the preceding claims,
**characterised in that**
provided between flanges (15, 16) projecting from the second connecting piece (14) at an angle to a bulkhead is a connection (17) for a suspension strut.

5. A longitudinal beam in accordance with at least one of the preceding claims,
**characterised in that**
provided between flanges (15, 16) projecting at an angle from the second connecting piece (14) is a connection (18) for a pivot bearing (19) for a shock absorber.

6. A longitudinal beam in accordance with at least one of the preceding claims,
**characterised in that**
provided on the second connecting piece (14) is a connection (20) for a pedal bearing block and/or a steering column fixing.

7. A longitudinal beam in accordance with at least one of the preceding claims,
**characterised in that**
the longitudinal beam section (3) is U-shaped in design with the flanges (6, 7) of the U pointing upwards.

8. A longitudinal beam in accordance with claim 7,
**characterised in that**
the first connecting piece (8) of the longitudinal beam head (4) projects into the U of the longitudinal beam section (3).

9. A longitudinal beam in accordance with at least one of the preceding claims,
**characterised in that**
provided at the transition in the longitudinal beam head (4) from the first (8) to the second connecting piece (14) is a connection (22) for a bearing block (10) for a driver's cab (1).

10. A longitudinal beam in accordance with at least one of the preceding claims,
**characterised in that**
provided in the first connecting piece (8) is an opening (12) for a steering column.

11. A longitudinal beam in accordance with at least one of the preceding claims,
**characterised in that**
a connection (13) for a tilt cylinder is provided in the area of the connection area (11).

12. A carrier structure having a longitudinal beam (2) in accordance with at least one of the preceding claims,
**characterised in that**
provided parallel to a longitudinal vehicle axis are at least two longitudinal beams (2) with second connecting pieces (14) projecting upwards beyond a base plate (5) which are connected to a cross beam (23).

13. A carrier structure in accordance claim 12,
**characterised in that**
the cross beam (23) is integrated in a bulkhead (26).

14. A carrier structure in accordance with claim 12 or 13,
**characterised in that**
a bearing block (10) is integrated in a transition between the longitudinal beam (2) and the bulkhead (23).

## Revendications

1. Longeron pour une cabine de conduite, lequel s'étend de façon angulaire vers le haut sur une plaque de base (5), **caractérisé en ce qu'**une section du longeron (3) est constituée essentiellement d'une tête de longeron (4) séparée, la tête de longeron (4) étant formée de façon angulaire à partir d'une première pièce de raccordement (8) orientée vers la section du longeron (3) et à partir d'une seconde pièce de raccordement (14) s'éloignant vers le haut, une pluralité d'attaches (13, 17, 18, 20, 22) pour des composants de la cabine de conduite étant intégrée dans la tête de longeron (4) et la tête de longeron (4) étant réalisée comme une pièce moulée.

2. Longeron selon la revendication 1, **caractérisé en ce que** la première pièce de raccordement (8) est réalisée de façon massive.

3. Longeron selon la revendication 1 ou 2,
**caractérisé en ce que** la seconde pièce de raccordement (14) est réalisée approximativement en forme de U.

4. Longeron selon au moins l'une quelconque des revendications précédentes, **caractérisé en ce qu'**une attache (17) est prévue pour un montant à ressort entre les entretoises (15, 16) de la seconde pièce de raccordement (14) s'éloignant de façon angulaire par rapport à une paroi avant.

5. Longeron selon au moins l'une quelconque des revendications précédentes, **caractérisé en ce qu'**une attache (18) est prévue pour un coussinet de pivotement (19) d'un amortisseur entre les entretoises (15, 16) s'éloignant de façon angulaire de la seconde pièce de raccordement (14).

6. Longeron selon au moins l'une quelconque des revendications précédentes, **caractérisé en ce qu'**une attache (20) est prévue pour un sabot d'appui de pédale et/ou une fixation de colonne de direction au niveau de la seconde pièce de raccordement (14).

7. Longeron selon au moins l'une quelconque des revendications précédentes, **caractérisé en ce que** la section de longeron (3) est réalisée sous forme de U, les montants (6, 7) en forme de U allant vers le haut.

8. Longeron selon la revendication 7, **caractérisé en ce que** la tête de longeron (4) rentre dans la forme en U de la section de longeron (3) avec la première pièce de raccordement (8).

9. Longeron selon au moins l'une quelconque des revendications précédentes, **caractérisé en ce qu'**une attache (22) est prévue pour un sabot d'appui (10) pour une cabine de conduite (1) dans le passage (9) de la tête de longeron (4) entre la première et la seconde pièce de raccordement (8, 14).

10. Longeron selon au moins l'une quelconque des revendications précédentes, **caractérisé en ce qu'**un passage (12) est prévu pour la colonne de direction dans la première pièce de raccordement (8).

11. Longeron selon au moins l'une quelconque des revendications précédentes, **caractérisé en ce qu'**une attache (13) est prévue pour un vérin de basculement dans la région de l'attache (11).

12. Structure de support avec un longeron (2) selon au moins l'une quelconque des revendications précédentes, **caractérisée en ce qu'**au moins deux longerons (2) parallèles à un axe longitudinal du véhicule sont prévus, dont les secondes pièces de raccordement (14) dépassant vers le haut sur une plaque de base (5) sont reliées à un support transversal (23).

13. Structure de support selon la revendication 12, **caractérisée en ce que** le support transversal (23) est intégré dans une paroi avant (26).

14. Structure de support selon la revendication 12 ou 13, **caractérisée en ce qu'**un sabot d'appui (10) est intégré dans un passage entre le longeron (2) et la paroi avant (23).
